# FASCICULE DE BREVET EUROPEEN

(11) **EP 2 963 589 B1**
(45) Date de publication et mention de la délivrance du brevet: **19.12.2018**
(21) Numéro de dépôt: 15160173.9
(22) Date de dépôt: 20.03.2015
(51) Int. Cl.: G06K 19/07, H04B 1/18

(54) **LIMITEUR DE TENSION ET DE PUISSANCE POUR TRANSPONDEUR ÉLECTROMAGNÉTIQUE**
SPANNUNGS- UND LEISTUNGSBEGRENZER FÜR ELEKTROMAGNETISCHEN TRANSPONDER
VOLTAGE AND POWER LIMITER FOR ELECTROMAGNETIC TRANSPONDER

(30) Priorité: 02.07.2014 FR 1456333
(43) Date de publication de la demande: 06.01.2016
(73) Titulaire: STMICROELECTRONICS (ROUSSET) SAS, 13790 Rousset (FR)
(72) Inventeur: Battista, Marc, 13013 MARSEILLE (FR); Bas, Gilles, 30640 BEAUVOISIN (FR); Tailliet, François, 13710 FUVEAU (FR)
(74) Mandataire: Cabinet Beaumont

(56) Documents cités:
- WO-A1-2010/025156
- WO-A2-2014/035799
- US-A1- 2010 063 347

## Description

### Domaine

La présente description concerne de façon générale les circuits électroniques et, plus particulièrement, les transpondeurs électromagnétiques ou étiquettes électroniques (TAG).

### État de l'art antérieur

Les systèmes de communication à transpondeurs électromagnétiques sont de plus en plus fréquents, en particulier, depuis le développement des technologies de communication en champs proche (NFC - Near Field Communication).

Ces systèmes exploitent l'énergie produite par un champ radiofréquence d'un terminal pour communiquer avec, et le plus souvent alimenter, un transpondeur électromagnétique.

Pour protéger les circuits électroniques du transpondeur contre des surtensions ou des puissances trop élevées que son antenne capterait du terminal, on prévoit généralement des circuits limiteurs de tension.

Le document WO 2014/035799 décrit un circuit de protection contre les surtensions pour un récepteur sans fil.

Le document US-A-2010/0063347 décrit un système de transfert d'énergie transcutané pour une unité de puissance implantable.

### Résumé

L'invention est définie par les revendications.

Un mode de réalisation vise à améliorer tout ou partie des inconvénients des techniques connues de limitation de puissance ou de tension dans un transpondeur électromagnétique.

Un mode de réalisation vise à proposer une solution évitant le recours à un pont redresseur haute tension.

Un mode de réalisation vise à proposer une solution ne nécessitant aucune modification des circuits d'interprétation des données côté transpondeur.

Un mode de réalisation vise une solution préservant la modulation du signal radio fréquence.

Ainsi, un mode de réalisation prévoit un transpondeur électromagnétique comportant :
un circuit résonnant ;
un pont redresseur dont des bornes d'entrées sont connectées aux bornes du circuit résonnant et dont des bornes de sortie redressée fournissent une tension d'alimentation de circuits électroniques ; et
un dispositif de limitation de la tension aux bornes du circuit résonnant, connecté entre les bornes d'entrée du pont de redressement.

Selon un mode de réalisation, le dispositif de limitation comporte un circuit de détection de la tension crête du signal aux bornes du circuit résonant et de comparaison par rapport à un seuil, ledit circuit commandant un élément d'impédance réglable, connecté entre les bornes d'entrée du pont redresseur.

Selon un mode de réalisation, un circuit de filtrage est intercalé entre le circuit de détection de tension crête et l'impédance.

Selon un mode de réalisation, le filtre présente une constante de temps lorsque la tension détectée diminue qui est supérieure, dans un rapport d'au moins 10, à sa constante de temps quand la tension détectée augmente.

Selon un mode de réalisation, le transpondeur comporte en outre un circuit de pompe de charge augmentant la tension de commande de l'impédance réglable.

Selon un mode de réalisation, ledit seuil est réglable entre une première et une deuxième valeur supérieure, la deuxième valeur étant utilisée lorsque les circuits du transpondeur sont en mode rétromodulation.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une représentation très schématique et sous forme de blocs d'un exemple de système à transpondeur électromagnétique du type auquel s'appliquent à titre d'exemple des modes de réalisation qui vont être décrits ;
la figure 2 est un schéma-bloc illustrant partiellement un exemple de transpondeur électromagnétique usuel équipé d'un élément de limitation de la tension ;
la figure 3 représente, de façon schématique et sous forme de blocs, un mode de réalisation d'un transpondeur électromagnétique équipé d'un circuit de limitation de la puissance reçue ;
la figure 4 est un schéma bloc illustrant un mode de réalisation du circuit de limitation de la figure 3 ;
la figure 5 est un schéma bloc illustrant un autre mode de réalisation du circuit de limitation de la figure 3 ; et
la figure 6 est un schéma bloc illustrant encore un autre mode de réalisation du circuit de limitation de la figure 3.

### Description détaillée

De mêmes éléments ont été désignés par de mêmes références aux différentes figures.

Par souci de clarté, seules les étapes et éléments utiles à la compréhension des modes de réalisation qui vont être décrits ont été représentés et seront détaillés. En particulier, la génération des signaux radiofréquences et leur interprétation côté terminal et côté transpondeur n'ont pas été détaillées, les modes de réalisation décrits étant compatibles avec les techniques usuelles de génération et d'interprétation de ces signaux. Dans la description qui suit, lorsqu'on fait référence aux termes approximativement, environ et, de l'ordre de, cela signifie à 10% près, de préférence à 5% près.

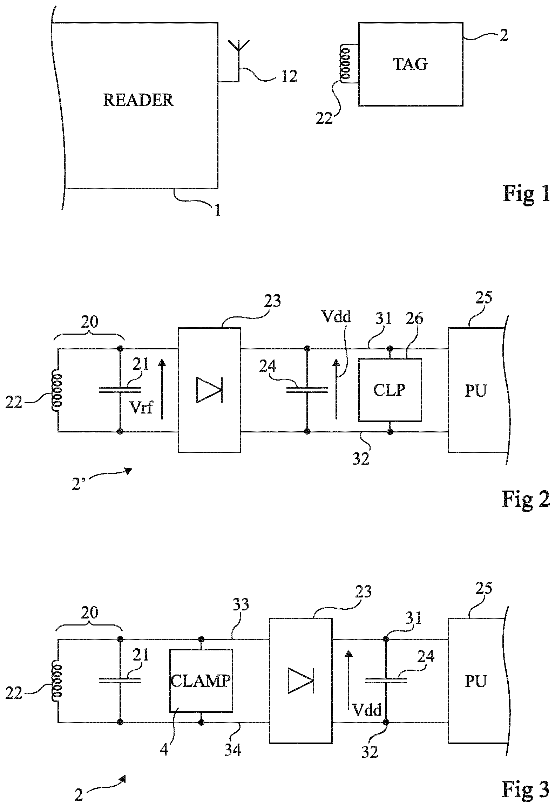

La figure 1 est une vue schématique, sous forme de blocs, d'un exemple de système de communication sans contact en champ proche (NFC). Un lecteur 1 (READER) comporte divers circuits électroniques de génération d'un signal radiofréquence émis à l'aide d'une antenne 12. Le champ radiofréquence généré par le terminal ou lecteur 1 est capté par un ou plusieurs transpondeurs électromagnétiques, par exemple une étiquette électronique 2 (TAG) qui se trouve à portée. L'étiquette 2 comporte elle-même une antenne 22. L'étiquette 2 extrait généralement l'énergie nécessaire au fonctionnement des circuits qu'elle comporte du champ radiofréquence généré par le terminal 1.

Pour une communication dans le sens terminal 1 vers transpondeur 2, le terminal 1 module, généralement en amplitude, la porteuse de télé alimentation (typiquement à 13,56 MHz). Dans le sens transpondeur 2 vers terminal 1, la communication s'effectue par une modification de la charge (rétromodulation) que constitue le transpondeur sur le circuit oscillant du terminal, par exemple en modulation d'amplitude ou en modulation de phase.

En fonction de la distance entre le terminal 1 et le transpondeur 2, la puissance du champ reçue par le transpondeur 2 varie fortement. Cela engendre des variations importantes de la tension développée aux bornes de l'antenne du transpondeur 2. Cette tension pouvant atteindre plusieurs dizaines de volts peut excéder la tension que sont susceptibles de supporter les circuits électroniques du transpondeur 2, qui n'est que de quelques volts.

La figure 2 est un schéma électrique simplifié d'un exemple d'étiquette électronique 2' classique. Une telle étiquette 2' comporte un circuit résonnant 20 généralement parallèle, constitué d'un enroulement inductif formant l'antenne 22 en parallèle avec un élément capacitif 21. Ce circuit résonnant capte le champ radiofréquence d'un terminal à portée duquel il se trouve. La tension Vrf récupérée aux bornes du circuit résonnant est redressée par un pont de redressement 23 (généralement un pont de diodes double alternance). La sortie redressée du pont 23 fournit une tension Vdd, filtrée par un élément capacitif 24. Cette tension Vdd constitue (le cas échéant par l'intermédiaire d'un régulateur de tension non représenté) la tension d'alimentation d'un ou plusieurs circuits électroniques 25 (PU) du transpondeur 2, parmi lesquels généralement une unité de traitement des signaux reçus du terminal et de génération des signaux de rétromodulation.

Pour éviter que la tension Vdd n'atteigne des valeurs préjudiciables aux circuits 25, on prévoit généralement un circuit 26 (CLP) de limitation de la tension Vdd. Ainsi, quand les conditions de couplage entre le transpondeur et un terminal font que la tension Vrf développée aux bornes de l'antenne est trop importante, le circuit 26 écrête la tension Vdd afin de la limiter à une valeur acceptable.

Les circuits usuels de limitation de tension sont par exemple constitués d'une diode Zener ou d'un transistor MOS commandé par un circuit détectant la valeur de la tension Vdd.

Une solution telle que décrite en relation avec la figure 2 nécessite que les éléments constitutifs du pont redresseur 23 et, plus généralement, tous les éléments côté antenne par rapport à celui-ci, soient capables de supporter les éventuelles surtensions vues par l'antenne. En particulier, les diodes ou éléments équivalent assurant cette fonction ont besoin de supporter ces surtensions qui peuvent atteindre plusieurs dizaines de volts.

Un autre problème intervient sous l'effet de la modulation du signal radiofréquence. En effet, s'agissant d'une modulation d'amplitude, si son état haut est écrêté mais que son état bas redescend en dessous du seuil de l'élément limiteur et donc ne l'est pas, cela engendre une diminution de l'amplitude de la modulation susceptible d'être captée par le circuit 25. On est donc généralement contraint de rapprocher les seuils des états haut et bas du démodulateur d'amplitude équipant le circuit 25 coté transpondeur, ce qui le rend sensible au bruit.

La figure 3 est un schéma électrique simplifié d'un mode de réalisation d'un transpondeur 2 équipé d'un circuit de limitation de puissance.

On retrouve un circuit résonnant 20, constitué d'un enroulement inductif ou antenne 22 et d'un élément capacitif 21, par exemple en parallèle, relié à des bornes d'entrées 33 et 34 d'un pont redresseur 23. Les sorties redressées 31 et 32 du pont 23 sont reliées aux bornes d'alimentation de l'unité de traitement 25, un condensateur 24 filtrant la tension Vdd de sortie du pont 23.

Selon ce mode de réalisation, un circuit 4 (CLAMP) de limitation de puissance est connecté entre les bornes 33 et 34 en amont du pont redresseur 23.

Le fait de limiter la tension en amont du pont (côté antenne) présente de nombreux avantages parmi lesquels :
une protection de l'antenne 22 contre une puissance trop élevée ;
une limitation de l'échauffement des circuits constituant le pont redresseur en présence d'un champ important ; et
une réduction du nombre d'éléments devant supporter une haute tension et ainsi une réduction de la surface occupée par les circuits intégrés.

On aurait pu penser placer une diode de protection (par exemple, une diode Zener) directement aux bornes de l'antenne. Toutefois, une telle diode écrêterait le signal et aurait toujours l'inconvénient d'atténuer la modulation. De plus, cette diode devrait être surdimensionnée en raison des tensions à supporter.

Les inventeurs prévoient de réaliser le circuit 4 de limitation sous la forme d'une impédance ramenée sur l'antenne dont la valeur est asservie sur la tension crête aux bornes de celle-ci. En d'autres termes, on prévoit un circuit 4 présentant une impédance constante aux bornes de l'antenne, indépendamment du fait que la protection est active ou non. Par conséquent, l'activation du circuit de protection 4 consiste à diminuer la résistance qu'il présente aux bornes de l'antenne 22 de façon à limiter la tension maximale et donc limiter la puissance maximale absorbée.

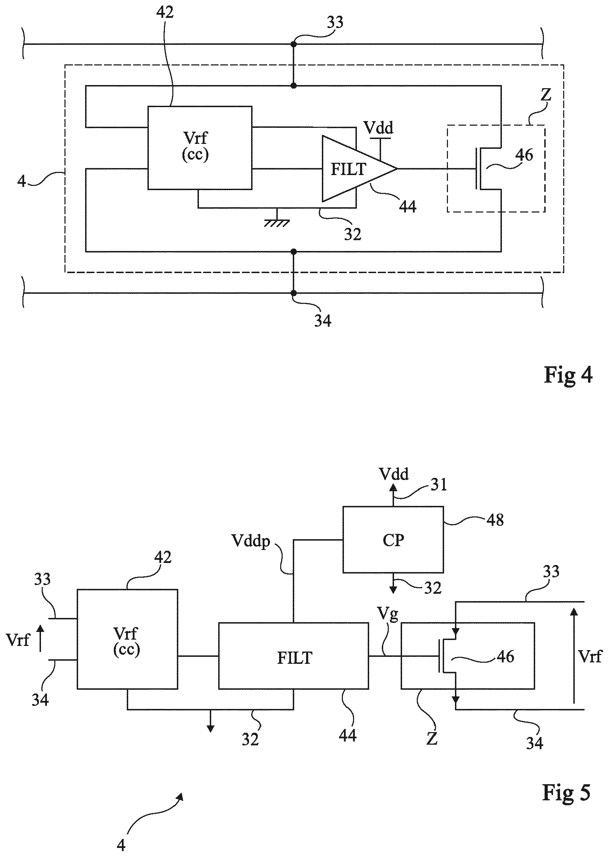

La figure 4 est un schéma bloc d'un mode de réalisation d'un circuit 4 de limitation de la tension radiofréquence Vrf en amont du pont redresseur (23, figure 3).

Le dispositif 4 comporte un circuit 42 (Vrf (cc)) de détection de la tension Vrf crête, dont deux bornes d'entrée sont directement connectées aux bornes 33 et 34. Le circuit 4 comporte également un amplificateur 44 de filtrage (FILT) de la sortie du circuit 42. Ce filtre 44 doit présenter la caractéristique d'avoir une réponse rapide (constante de temps faible) lors d'une augmentation de la tension crête à crête au-delà d'un seuil, mais une réponse plus lente (constante de temps plus élevée) lors de la diminution de cette tension de façon à filtrer la modulation sur la commande du champ. En pratique, la constante de temps de descente du filtre doit être supérieure à la durée d'un symbole transmis par la modulation radiofréquence. La constante de temps en montée est par exemple 10 à 100 fois inférieure à la constante de temps du filtre en descente. L'amplificateur-filtre 44 est alimenté par la tension Vdd ou par une autre source d'alimentation directement générée à partir de l'antenne.

La sortie du filtre 44 commande une impédance variable Z constituée, dans cet exemple, d'un transistor MOS 46 dont les drain et source sont connectés directement aux bornes 33 et 34 et dont la grille est reliée en sortie de l'amplificateur 44. Lorsque le champ capté par l'antenne augmente, la tension crête Vrf a tendance à augmenter. En diminuant de façon correspondante l'impédance Z (en augmentant la tension de grille du transistor 46), on assiste alors à une diminution de la tension Vrf.

Par rapport aux solutions classiques du type de celle de la figure 2, un avantage est que tous les composants en aval du pont redresseur 23, y compris les éléments de redressement de ce pont, n'ont pas besoin de supporter une surtension, celle-ci étant filtrée avant le pont. Par ailleurs, on limite ainsi les échauffements sur l'antenne en dissipant, dans l'élément 46, la surtension éventuelle. En outre, on préserve l'amplitude de la modulation.

La figure 5 est un schéma bloc d'un autre mode de réalisation d'un dispositif 4 limiteur de puissance à placer en amont d'un pont redresseur dans un transpondeur électromagnétique.

Par rapport au mode de réalisation de la figure 4, une différence est que l'on utilise un circuit de pompe de charge 48 (CP) afin d'augmenter l'amplitude de la tension de commande Vg du transistor 46, (de préférence dans un rapport de l'ordre de 10). En pratique, le circuit 48, alimenté par la tension Vdd, fournit une tension d'alimentation supérieure Vddp au filtre 44. Cela permet de diminuer la taille du transistor 46 par rapport au mode de réalisation de la figure 4. De plus, dans la mesure où le circuit de pompe de charge 48 a pour rôle de fournir uniquement une tension de grille, sa consommation est très faible et la taille des éléments capacitifs qu'il comporte n'a pas besoin d'être importante. En particulier, les inventeurs considèrent que la surface occupée par le circuit de pompe de charge 48 est négligeable devant le gain en surface côté transistor 46.

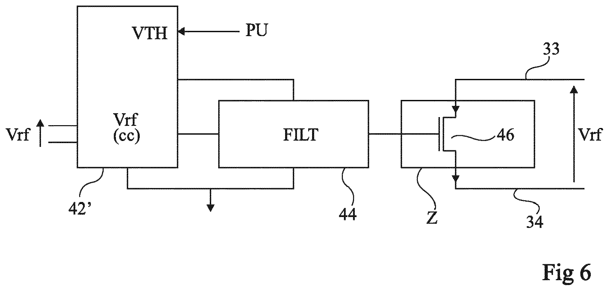

La figure 6 est un schéma bloc d'encore un autre mode de réalisation du circuit de limitation. Selon ce mode de réalisation, le détecteur de tension crête 42' est associé à un élément de réglage dynamique du seuil de déclenchement (VTH). La commande provient des circuits numériques PU du transpondeur et vise à augmenter le seuil de déclenchement pendant les périodes de rétromodulation. Ainsi, le déclenchement de la protection s'effectue à partir d'une première valeur hors des périodes de rétromodulation et à partir d'une deuxième valeur pendant les périodes de rétromodulation, la deuxième valeur étant supérieure à la première. Un avantage est d'améliorer ainsi la visibilité de l'étiquette par rapport au lecteur.

Le prix à payer est une légère augmentation de la consommation pour le cas où la rétromodulation ne concerne que des états zéro. Par contre, de façon statistique, la réponse est équilibrée entre des états hauts et des états bas. Dans un tel cas, on n'augmente alors que de la moitié de la puissance consommée pendant les périodes de rétromodulation. Par exemple en considérant un seuil aux alentours de 4 volts en fonctionnement hors rétromodulation et en passant à un seuil à 6 volts pendant les périodes de rétromodulation, il n'y a statistiquement pas d'augmentation de la puissance.

Les modes de réalisation des figures 5 et 6 sont combinables.

Divers modes de réalisation ont été décrits. Diverses modifications apparaîtront à l'homme de l'art. En particulier, le choix de la valeur des seuils de déclenchement du circuit de protection 4 dépend de la tenue en tension des composants du transpondeur, de la température maximale à ne pas dépasser (proportionnelle à la puissance absorbée) et peut varier d'une application à une autre. De plus, la mise en oeuvre pratique des modes de réalisation qui ont été décrits est à la portée de l'homme du métier en utilisant les indications fonctionnelles données ci-dessus et en utilisant des composants électroniques en eux-mêmes usuels.

## Revendications

1. Transpondeur électromagnétique comportant :
un circuit résonnant (20) ;
un pont redresseur (23) dont des bornes d'entrées (33, 34) sont connectées aux bornes du circuit résonnant et dont des bornes de sortie redressée (31, 32) sont configurées pour fournir une tension (Vdd) d'alimentation de circuits électroniques (25) ; et
un dispositif (4) de limitation de la tension (Vrf) aux bornes du circuit résonnant, connecté entre les bornes d'entrée du pont de redressement et comportant un circuit (42) de détection de la tension crête du signal aux bornes du circuit résonant et de comparaison par rapport à un seuil réglable entre une première et une deuxième valeur supérieure, la deuxième valeur étant utilisée lorsque les circuits du transpondeur sont en mode rétromodulation, ledit circuit (42) de détection et de comparaison étant configuré pour commander un élément d'impédance (Z) réglable, connecté entre les bornes (33, 34) d'entrée du pont.

2. Transpondeur selon la revendication 1, dans lequel un circuit de filtrage (44) est intercalé entre le circuit (42) de détection de tension crête et l'impédance (Z).

3. Transpondeur selon la revendication 2, dans lequel le filtre présente une constante de temps lorsque la tension détectée diminue, qui est supérieure, dans un rapport d'au moins 10, à sa constante de temps quand la tension détectée augmente.

4. Transpondeur selon l'une quelconque des revendications 1 à 3, comportant en outre un circuit de pompe de charge (48) configuré pour augmenter la tension de commande de l'impédance réglable (Z).

## Patentansprüche

1. Ein elektromagnetischer Transponder, der Folgendes aufweist:
eine Resonanzschaltung (20);
eine Gleichrichterbrücke (23) mit Eingangsanschlüssen (33, 34), die über die Resonanzschaltung verbunden sind und mit Gleichrichterausgangsanschlüssen (31, 32), die konfiguriert sind zum Vorsehen einer Spannung (Vdd) zum Betreiben elektronischer Schaltungen (25); und
eine Vorrichtung (4) zum Begrenzen der Spannung (Vrf) über die Resonanzschaltung, die zwischen den Eingangsanschlüssen der Gleichrichterbrücke angeschlossen ist und eine Schaltung (42) zum Detektieren der Spitzenspannung des Signals über der Resonanzschaltung aufweist und zum Vergleichen bezüglich eines Schwellenwertes, der zwischen einem ersten und einem zweiten größeren Wert einstellbar ist, wobei der zweite Wert verwendet wird, wenn sich die Transponderschaltungen im Retromodulationsmodus befinden, wobei die Detektions- und Vergleichsschaltung (42) konfiguriert ist zum Steuern eines Elements mit einstellbarer Impedanz (Z), das zwischen den Eingangsanschlüssen (33, 34) der Gleichrichterbrücke geschaltet ist.

2. Transponder nach Anspruch 1, wobei eine Filterschaltung (44) zwischen der Spitzenspannungsdetektionsschaltung (42) und der Impedanz (Z) angeordnet ist.

3. Transponder nach Anspruch 2, wobei der Filter eine Zeitkonstante aufweist, wenn die detektierte Spannung abnimmt, die in einem Verhältnis von wenigstens 10 größer ist als ihre Zeitkonstante, wenn die detektierte Spannung ansteigt.

4. Transponder nach einem der Ansprüche 1 bis 3, der ferner eine Ladungspumpschaltung (48) aufweist, die konfiguriert ist zum Erhöhen der Steuerspannung der einstellbaren Impedanz (Z).

## Claims

1. An electromagnetic transponder comprising:
a resonant circuit (20);
a rectifying bridge (23) having input terminals (33, 34) connected across the resonant circuit and having rectified output terminals (31, 32) which are configured to provide a voltage (Vdd) for powering electronic circuits (25); and
a device (4) for limiting the voltage (Vrf) across the resonant circuit, connected between the input terminals of the rectifying bridge and comprising a circuit (42) of detection of the peak voltage of the signal across the resonant circuit and of comparison with respect to a threshold, adjustable between a first and a second greater value, the second value being used when the transponder circuits are in retromodulation mode, said detection and comparison circuit (42) being configured to control an element of adjustable impedance (Z), connected between the input terminals (33, 34) of the rectifying bridge.

2. The transponder of claim 1, wherein a filtering circuit (44) is interposed between the peak voltage detection circuit (42) and the impedance (Z).

3. The transponder of claim 2, wherein the filter has a time constant when the detected voltage decreases which is greater by a ratio of at least 10 than its time constant when the detected voltage increases.

4. The transponder of any of claims 1 to 3, further comprising a charge pump circuit (48) configured to increase the control voltage of the adjustable impedance (Z).
